# EUROPÄISCHE PATENTSCHRIFT

(11) **EP 0 960 643 B1**
(45) Veröffentlichungstag und Bekanntmachung des Hinweises auf die Patenterteilung: **20.07.2005**
(21) Anmeldenummer: 99107728.0
(22) Anmeldetag: 19.04.1999
(51) Int. Cl.: B01D 17/028, B01D 17/038, B01D 17/032, B01D 17/022, B04C 5/103

(54) **Abscheider zum Trennen eines Zweiphasen-Flüssigkeitsgemisches in Leichtflüssigkeit und Schwerflüssigkeit**
Device to separate a two-phase liquid mixture into light liquid and heavy liquid
Appareil de séparation d'un mélange de liquides à deux phases en liquide léger et en liquide lourd

(30) Priorität: 18.05.1998 CH 108998
(43) Veröffentlichungstag der Anmeldung: 01.12.1999
(73) Patentinhaber: AWAS AG, 8570 Weinfelden (CH)
(72) Erfinder: Ihne, Heinz, 57234 Wilnsdorf-Rudersdorf (DE)
(74) Vertreter: Köver, François

(56) Entgegenhaltungen:
- EP-A- 0 199 495
- WO-A-89/07971
- DE-A- 4 330 552
- DE-C- 742 832
- GB-A- 2 167 689
- US-A- 2 084 958
- US-A- 2 191 190
- US-A- 4 396 504
- US-A- 4 425 239
- US-A- 4 483 774

## Beschreibung

Die vorliegende Erfindung betrifft einen Abscheider zum Trennen eines einen kleineren Anteil Leichtflüssigkeit und einen grösseren Anteil Schwerflüssigkeit enthaltenden Zweiphasen-Flüssigkeitsgemisches, das gegebenenfalls auch Schlamm mitführt, wie ölverschmutztes und ggf. schlammführendes Wasser, gemäss dem Oberbegriff des Patentanspruchs 1.

Ein Abscheider der eingangs erwähnten Art ist beispielsweise aus WO-93/07946 bekannt. Mit einem Abscheidebecken zum Auffangen der Leichtflüssigkeit und ggf. des Schlammes sind ein Zulaufrohr für das zu trennende Gemisch und ein Ablaufrohr für von Leichtflüssigkeit und ggf. von Schlamm weitgehend befreite Schwerflüssigkeit verbunden. Die im Abscheidebecken enthaltene Flüssigkeit reicht zumindest bis zu einem von einer Ablaufschwelle vom Abscheidebecken zum Ablaufrohr vorgegebenen niedrigsten Flüssigkeitsspiegel. Innerhalb des Abscheidebeckens ist ein Leichtflüssigkeit-Sammler angeordnet, der eine im wesentlichen rohrförmige vertikale Wandung aufweist. Vom zulaufrohr gelangt das zu trennende Gemisch zum Inneren des Sammlers. Aus einem unteren Bereich des Sammlers gelangt Schwerflüssigkeit und ggf. Schlamm zu einem unteren Bereich des Abscheidebeckens. Innerhalb des Sammlers ist eine vertikale Trennwand angeordnet, die sich mit spiralartigen Windungen von der Wandung des Sammlers zur Achse des Sammlers hin einrollt, wobei aufeinanderfolgende Windungen der Trennwand miteinander einen spiralartigen Zwischenraum definieren und eine äusserste Windung der Trennwand zusammen mit der Wandung des Sammlers einen äussersten Zwischenraum definiert. Es zeigte sich, dass dieser aus WO-93/07946 bekannte Abscheider (wie auch andere gleichartige Abscheider) keine hinreichende und zufriedenstellende Trennung des Zweiphasen-Flüssigkeitsgemisches in Leichtflüssigkeit und Schwerflüssigkeit, insbesondere wenn es sich um ölverschmutztes und ggf. schlammführendes Wasser handelt, herbeizuführen vermag.

Ein Abscheider der eingangs erwähnten Art ist beispielsweise auch aus GB-A-2167689 bekannt. Zwar ist auch bei diesem Abscheider bekannt, dass innerhalb des Sammlers eine vertikale Trennwand angeordnet ist, diese erstreckt sich jedoch nicht über einen solchem Umfang, dass sie sich mit spiralartigen Windungen von der Wandung des Sammlers zur Achse des Sammlers hin einrollen würde. Es wird kein spiralartiger Zwischenraum definiert, sondern zwischen der Trennwand und nur einem Teil der Wandung des Sammlers ein äusserster Zwischenraum, und dieser auch nur in Form eines Segments (kein voller Umfang) eines Hohlzylinders (keine Spirale). In diesen Zwischenraum, durch die Wandung des Sammlers hindurch und annähernd tangential dazu, mündet das zulaufrohr ein, wobei der Zwischenraum eine horizontal-radiale lichte Weite aufweist, die der horizontalen Weite des Zulaufrohres entspricht. Hingegen taucht der Sammler mit der darin angeordneten Trennwand stets voll in der im Abscheidebecken enthaltenen Flüssigkeit ein, d.h. es können zu keiner Zeit die Wandung des Sammlers und die Trennwand je einen oberen Rand aufweisen, der höher liegen würde als der niedrigste Flüssigkeitsspiegel - deshalb können die Ölabscheidung und Ölableitung bei kleinen Zulaufmengen nicht effizient stattfinden: Sollten über einen längeren Zeitraum nur kleine Mengen Flüssigkeit aber mit ziemlich hohem Ölanteil zufliessen, so wird die Ölschicht sehr hoch und der das zu trennende Gemisch enthaltende Reinigungsraum entsprechend kleiner, so dass die Reinigungsleistung sinkt. Auch kann (und wird) sich zwar der Schlamm in einem unteren Bereich des Abscheidebeckens sammeln, es ist jedoch überhaupt nicht offenbart, diesen Bereich bewusst als Schlammfangraum vorzusehen und entsprechend auszubilden.

Aus DE-A-2851213 ist eine von einem Zulaufrohr tangential in einen Sammler eintretende Strömung bekannt. Im Sammler dieser Vorrichtung verläuft die Strömung schraubenartig nach unten, d.h. um eine vertikale Achse herum und nicht spiralartig horizontal zur Achse hin. Deshalb ist innerhalb des Sammlers keine Trennwand vorgesehen.

Aus WO-89/07971 ist ein Sammler bekannt, bei dem das Zulaufrohr durch die Wandung des Sammlers hindurch und annähernd tangential dazu in den Sammler einmündet. Dieser Sammler weist keine Trennwand auf, deren aufeinanderfolgende Windungen miteinander einen spiralartigen Zwischenraum definieren würden, in dessen äussersten Bereich das Zulaufrohr einmünden könnte.

Aus EP-A-0199495 ist ein Sammler der eingangs definierten Art d.h. ein eine Trennwand aufweisender Sammler bekannt, allerdings mit dem Unterschied, dass dieser Sammler ausser im Bereich des oberen und des unteren axialen Ablaufes geschlossen ist: So können Schwerflüssigkeit und ggf. Schlamm nicht aus dem ganzen unteren Bereich des Sammlers, sondern nur aus dem Bereich seines unteren axialen Ablaufes nach unten austreten, folglich können sich am Boden des Sammlers Ablagerungen bilden, die den Sammler verstopfen und nur durch spezielle Reinigung zu beseitigen sind. Es wird offenbart, dass bei diesem Sammler die lineare Flussgeschwindigkeit konstant ist, was impliziert (wie es auch aus den zeichnungen hervorgeht dass entlang den Windungen der Trennwand die horizontal-radiale lichte Weite des Zwischenraumes zwischen den Windungen der Trennwand konstant ist wie bei einer archimedischen Spirale. Ohne weitere Erklärung im Text zeigt eine einzelne Zeichnung im Schnitt eine variable lichte Weite des Zwischenraumes, gerade in dieser Hinsicht ist aber diese Zeichnung technisch offensichtlich falsch - der dargestellte Schnitt passt nicht zur entsprechenden Draufsicht, auf welcher die lichte Weite als konstant dargestellt ist. Der obere Rand der Trennwand dieses Sammlers verliert an Höhe entlang deren Windungen von der wandung des Sammlers zu dessen Achse hin, um schwere Partikel zur Mitte des Bodens und dort zum unteren axialen Ablauf, leichte Partikel hingegen zur Mitte des oberen Ablaufes zu fördern. Dazu muss allerdings der Sammler während seines Betriebes stets gefüllt bleiben: Weil er aber sondern allseits geschlossen ist, benötigt sein Betrieb, um ihn gefüllt zu halten, eine erhebliche Zulaufmenge. Bei der vorgesehenen Anwendung dieses Sammlers in der Papierindustrie ist diese Zulaufmenge ausreichend und durch Pumpendruck erreichbar, hingegen ist bei einem Zweiphasen-Flüssigkeitsgemisch, das gegebenenfalls auch Schlamm mitführt, wie bei ölverschmutztem und ggf. schlammführendem Wasser, eine solche Betriebsbedingung nicht akzeptabel. Ein Sammler, der oben und unten offen wäre und dabei innerhalb eines Abscheidebeckens angeordnet wäre, ist in keiner Weise offenbart oder angedeutet.

Aufgabe der Erfindung ist es, einen Abscheider zur Verfügung zu stellen, der gegenüber dem Stand der Technik eine verbesserte Trennung des Zweiphasen-Flüssigkeitsgemisches in Leichtflüssigkeit und Schwerflüssigkeit herbeizuführen vermag, insbesondere wenn es sich um ölverschmutztes und ggf. schlammführendes Wasser ggf. bei kleinen Zulaufmengen handelt.

Diese Aufgabe wird erfindungsgemäss gelöst durch einen Abscheider der eingangs genannten Art, der durch die im Anspruch 1 definierte Kombination von Merkmalen definiert ist. Vorteilhafte Ausbildungen der Erfindung sind in den abhängigen Ansprüchen definiert.

Durch die vom Zulaufrohr tangential in den Sammler eintretende und darin spiralartig zu dessen Achse hin geführte Strömung des Zweiphasen-Flüssigkeitsgemisches wird die Leichtflüssigkeit von der Schwerflüssigkeit getrennt, besonders wenn es sich beim Zweiphasen-Flüssigkeitsgemisch um ölverschmutztes und ggf. schlammführendes Wasser der Fall ist.

An sich ist dieser Koaleszenz- und Trenn-Effekt u.a. aus sogenannten Zyklonen bekannt. Es wird jedoch gemeint, dass die mit der erfindungsgemässen Vorrichtung erreichte, im Vergleich zum Stand der Technik besonders effiziente Trennung im wesentlichen wie folgt erklärt werden könnte:

Die Strömungsführung zur Achse des Sammlers hin bei sich entsprechend spiralartig verengendem Zwischenraum, in welchem diese Strömung geführt wird, bewirkt eine allmähliche Beschleunigung der Strömung, welche der Koaleszenz der Tröpfchen der Leichtflüssigkeit förderlich ist.

Durch die Strömungsführung über den sich vorzugsweise periodisch verengenden und erweiternden Zwischenraum entlang den Windungen der Trennwand werden pulsierenden Druckverhältnisse bzw. ein pulsierender Durchfluss erreicht, welcher der Koaleszenz der Tröpfchen der Leichtflüssigkeit weiter förderlich ist.

Durch den bevorzugten Einsatz von unterschiedlich benetzbaren Werkstoffen der Trennwand des Sammlers wird die Phasentrennung ganz besonders begünstigt.

Bedingt durch die an ihrem oberen Rand zur Mitte hin an Höhe verlierende Trennwand kann die zur Mitte hin abgeschiedene und ausgeschwommene Leichtflüssigkeit von einem mittig angeordneten Abzugsrohr aufgenommen werden. Restwassermengen können dabei mit einströmen. Das Abzugsrohr führt zu einem Ölabdrückraum, in dem die Leichtflüssigkeit aufsteigt, während die Schwerflüssigkeit sinkt und von unten zum Ablaufrohr geführt wird. Bedingt durch die Wichte-Unterschiede der Flüssigkeiten in den verschiedenen kommunizierenden Räumen steigt die Leichtflüssigkeit im Ölabdrückraum auf einen erhöhten Flüssigkeitspiegel, so dass die Leichtflüssigkeit über einen Überlauf abgedrückt und so zu einem Öltank geführt wird.

Die asymmetrische Gestaltung des unteren Teiles der Trennwand lässt aufgeschwommene Partikel, Mizellen und Tröpfchen von Leichtflüssigkeit, die gegebenenfalls in der unten austretenden Schwerflüssigkeit verbleiben, im Abscheider auf der Seite des Zulaufrohres d.h. vom Ablaufrohr möglichst entfernt aufsteigen, so dass sie nicht sofort in den Ablauf geraten, sondern im Abscheider verbleiben und abgefangen werden können.

Bei längerem Betrieb bildet sich unter dem Einfluss der Kreisströmung im Sammler ebenfalls im Abscheidebecken eine Kreisströmung. So können die allerletzten aufgeschwommenen Partikel, Mizellen und Tröpfchen von einer Tauchwand zurückgehalten werden und von einem oberen Bereich davon zum Sammler rückgeführt werden.

Nachstehend wird ein Ausbildungsbeispiel der Erfindung in weiteren Einzelheiten anhand der Zeichnung beschrieben, woraus auch weitere Merkmale und Vorteile der Erfindung erkennbar werden. Dabei sind in den Zeichnungen einander entsprechende Teile mit gleichen Bezugszeichen versehen. Es zeigen:
- Fig. 1: eine schematische Darstellung eines Ausbildungsbeispiels eines erfindungsgemässen Abscheiders, im axialen vertikalen Schnitt entsprechend der Linie B-B der Fig. 2; und
- Fig. 2: eine schematische Darstellung des Abscheiders der Fig. 1, im radialen horizontalen Schnitt entsprechend der Linie A-A der Fig. 1.

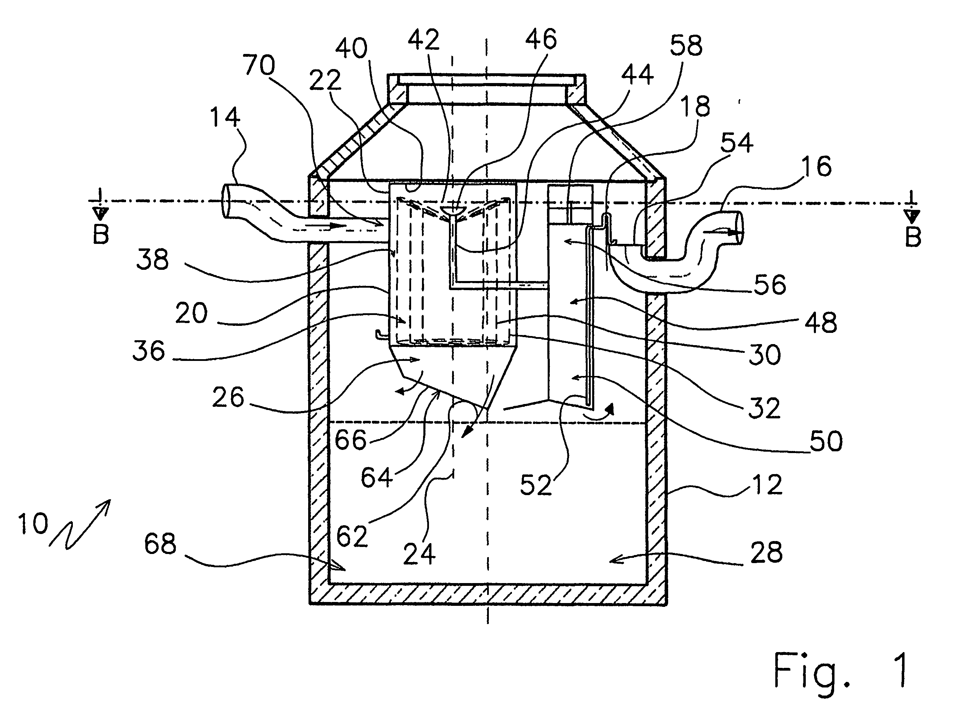

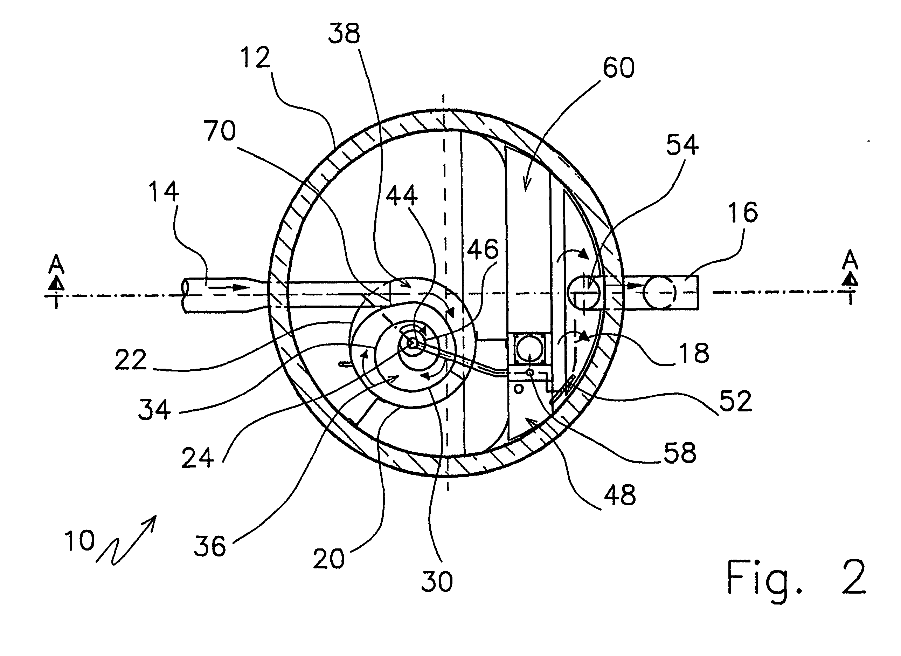

Ein in Fig. 1 und Fig. 2 dargestelltes und gesamthaft mit 10 bezeichnetes Ausbildungsbeispiel eines erfindungsgemässen Abscheiders ist zum Auffangen von Leichtflüssigkeit und ggf. Schlamm bestimmt, die als kleinere Menge in einer grösseren Menge Schwerflüssigkeit enthalten und davon mitgeführt werden. Es handelt sich bei diesem Zweiphasen-Flüssigkeitsgemisch, das gegebenenfalls auch zusätzlichen Schlamm mitführt, beispielsweise um ölverschmutztes und ggf. schlammführendes Wasser, wie es beispielsweise auf Strassen und Autobahnen anfällt und zur Kanalisation geführt wird.

Der Abscheider 10 umfasst ein Abscheidebecken 12 mit einem Zulaufrohr 14 für die Zuleitung des zu trennenden Gemisches und einem Ablaufrohr 16 für die Ableitung der von der Leichtflüssigkeit (beispielsweise Öl) und ggf. vom Schlamm weitgehend befreite Schwerflüssigkeit (beispielsweise Wasser). Das Zulaufrohr 14 und das Ablaufrohr 16 sind am dem im wesentlichen hohlzylindrisch mit vertikaler Achse ausgebildeten Abscheidebecken 12 im wesentlichen diametral einander gegenüberliegend angeordnet. Eine Ablaufschwelle 18 bestimmt durch ihre Höhe einen (nicht näher dargestellten) niedrigsten Flüssigkeitsspiegel im Abscheidebecken 12.

Im Abscheidebecken 12 ist ein Leichtflüssigkeit-Sammler 20 angeordnet, der eine im wesentlichen rohrförmige vertikale Wandung 22 um eine im wesentlichen vertikalen Achse 24 aufweist. Vom Zulaufrohr 14 gelangt das Gemisch zum Inneren des Sammlers 20, indem das Zulaufrohr 14 durch die Wandung 22 des Sammlers 20 hindurch und annähernd tangential dazu in den Sammler 20 einmündet. Aus einem unteren Bereich 26 des Sammlers 20 gelangt Schwerflüssigkeit und ggf. Schlamm zu einem unteren Bereich 28 des Abscheidebeckens 12, der zweckmässigerweise als Schlammfangraum ausgebildet ist.

Innerhalb des Sammlers 20 ist eine flächige Trennwand 30 angeordnet, die sich, ausgehend von der Wandung 22 des Sammlers 20, im wesentlichen bis zur Achse 24 des Sammlers 20 mit spiralartigen Windungen einrollt. Präziser ausgedrückt ist die Trennwand 30 im wesentlichen als Ausschnitt einer Regelfläche geformt, welche sich aus in Fig. 1 als gestrichelte Linien 32 dargestellten vertikalen Erzeugenden und einer in Fig. 2 dargestellten horizontalen spiralartigen Leitkurve 34 ergibt. Aufeinanderfolgende Windungen der Trennwand 30 definieren miteinander einen spiralartigen Zwischenraum 36, während eine äusserste Windung der Trennwand 30 zusammen mit der Wandung 22 des Sammlers 20 einen äussersten Zwischenraum 38 des Sammlers 20 definiert, in welchen das Zulaufrohr 14 einmündet. Dementsprechend weist der äusserste Zwischenraum 38 des Sammlers 20 zumindest im Bereich einer Eintrittsmündung (70) des Zulaufrohres 14 eine horizontal-radiale lichte Weite auf, die annähernd der horizontalen Weite des Zulaufrohres 14 selbst entspricht.

Ein oberer Rand 40 der Wandung 22 des Sammlers 20 und ein oberer Rand 42 der Trennwand 30 liegen (vgl. in Fig. 2) beide zumindest im Bereich des äussersten Zwischenraumes 38 höher als der von der Ablaufschwelle 18 bestimmte niedrigste Flüssigkeitsspiegel.

Von der Wandung 22 des Sammlers 20 zu dessen Achse 24 hin verliert der obere Rand 40 der Trennwand 30 entlang deren Windungen an Höhe. Mittig-axial im Sammler 20 ist ein Abzugsrohr 44 angeordnet, dessen obere Öffnung 46 etwa auf Höhe des niedrigsten Flüssigkeitsspiegels liegt. Dieses Abzugsrohr 44 ist flexibel oder ausziehbar ausgebildet und an einem zum Schwimmen auf der Flüssigkeit vorgesehenen Schwimmkörper auf solche Weise angeordnet, dass sich die obere Öffnung 46 des Abzugsrohres 44 stets unweit des Flüssigkeitsspiegels auf der Achse 24 des Sammlers 20 (d.h. ebenfalls unweit der Spitze der vom oberen Rand 40 der Trennwand 30 des Sammlers 20 gebildeten umgekehrten Kegelform) befindet.

Das Abzugsrohr 44 führt vom Sammler 20 zu einem Ölabdrückraum 48. Von einem unterem Bereich 50 des Ölabdrückraumes 48 führt ein Abflussrohr 52 für die Schwerflüssigkeit in die Nähe und im wesentlichen auf die Höhe einer Austrittsmündung 54 des Ablaufrohres 16. Von einem oberem Bereich 56 des Ölabdrückraumes 48 führt ein Überlauf 58 für die Leichtflüssigkeit zu einem Öltank 60.

Ein unterer Bereich der Wandung 22 des Sammlers 20 ist im allgemeinen tiefer gelegen als die Trennwand 30 und dabei im allgemeinen kegelstumpfförmig ausgebildet mit einem unterer Rand 62, der auf einer geneigten Ebene 64 liegt. Letztere ist auf solche Weise angeordnet und geneigt, dass sie - und damit auch die vom unteren Rand 62 definierte untere Öffnung 66 des Sammlers 20 - einem annähernd vertikal unter dem Zulaufrohr 14 liegenden Teil 68 des unteren Bereiches 28 des Abscheidebeckens 12 zugewandt ist.

In dem hier beschriebenen Ausbildungsbeispiel sind der Sammler 20 und der Ölabdrückraum 48 separat innerhalb des Abscheidebeckens 12 angeordnet, wobei der Sammler 20 ausserhalb des Ölabdrückraumes 48 liegt. Der Ölabdrückraum 48 ist so ausgebildet, dass er im Abscheidebecken 12 vor der Austrittsmündung 54 des Ablaufrohres 16 eine Tauchwand ausbildet. Eine solche Tauchwand dient auf an sich bekannte Weise dazu, den Zustrom von Flüssigkeit aus dem Abscheidebecken 12 zum Ablaufrohr 16 auf Flüssigkeitsmassen aus dem unteren Bereich 28 des Abscheidebeckens 12 zu beschränken. Die Tauchwand bzw. der als Tauchwand wirkende Ölabdrückraum 48 reicht zu diesem Zweck nach oben bis oberhalb des niedrigsten Flüssigkeitsspiegels und nach unten in die Flüssigkeit hinein.

In einem anderen, im vorliegenden nicht beschriebenen Ausbildungsbeispiel können der Ölabdrückraum innerhalb des Abscheidebeckens und der Sammler innerhalb des Ölabdrückraumes angeordnet sein, und es wird dann eine separate Tauchwand vorgesehen.

In beiden Fällen (d.h. bei als Tauchwand wirkendem Ölabdrückraum oder bei separater Tauchwand) kann vorzugsweise, in einem oberen Bereich der Tauchwand in Nähe des niedrigsten Flüssigkeitsspiegels, eine (nicht dargestellte) Verbindung zum Rückführen von Flüssigkeit zum Sammler vorgesehen werden. Diese Verbindung kann beispielsweise als kleines Loch mit angeschlossener Leitung im oberen Teil der Tauchwand ausgebildet sein und dient im wesentlichen dazu, die von den Wichte-Unterschieden bewirkten Unterschiede der Flüssigkeitsspiegel in den verschiedenen Teilen der Anlage zu nutzen, um die allerletzten aufgeschwommene Partikel, Mizellen und Tröpfchen von Leichtflüssigkeit aus der austretenden Schwerflüssigkeit zu entfernen und zum Sammler zurückzuführen.

Um die Koaleszenz der aufgeschwommenen Partikel, Mizellen und Tröpfchen der Leichtflüssigkeit zu fördern, ist die Trennwand 30 auf ihren beiden Oberflächen d.h. auf ihren beiden vertikalen Seiten mit verschiedener Beschaffenheit ausgebildet. Auf der nach aussen gewandten Seite ihrer Windungen ist die Trennwand 30 von der Leichtflüssigkeit weniger benetzbar ausgebildet als auf der nach innen gewandten Seite ihrer Windungen. Ebenfalls ist die Wandung 22 des Sammlers 20 auf ihrer Innenseite besser benetzbar ausgebildet als die Trennwand 30 auf ihrer nach aussen gewandten Seite - weil ja die Wandung 22 des Sammlers 20 auf ihrer Innenseite die Fortsetzung nach aussen und das äussere Ende der Windungen der Trennwand 30 bildet.

Zur Erzeugung der gewünschten Oberflächenbeschaffenheit ist die Trennwand 30 auf ihrer nach aussen gewandten Seite mit einem die Leichtflüssigkeit abweisenden Material überzogen, beschichtet oder gestrichen, während die Trennwand 30 sowie die Wandung 22 des Sammlers 20 auf ihrer nach innen gewandten Seiten mit einem von der Leichtflüssigkeit gut benetzbaren Material überzogen, beschichtet oder gestrichen sind. Beispielsweise kann das die Leichtflüssigkeit abweisende Material ein ölabweisendes Polymer wie Polytetrafluorethylen, Polyethylen, Polypropylen und dergleichen sein, während das von der Leichtflüssigkeit benetzbare Material beispielsweise ein ölfreundliches bzw. ölfreundlicheres Polymer wie Polyamid, ein Epoxyharz und dergleichen sein kann.

Ausserdem hat sich erwiesen, dass es der Koaleszenz der aufgeschwommenen Partikel, Mizellen und Tröpfchen der Leichtflüssigkeit äusserst förderlich ist, wenn der Zwischenraum 36 der Trennwand 30 im Sammler 20 entlang den Windungen dieser Trennwand 30 eine variable, vorzugsweise periodisch variable horizontal-radiale lichte Weite aufweist. Dadurch erfährt die im Zwischenraum 36 vom Zulaufrohr 14 zum Abzugsrohr 44 laufende Flüssigkeit pulsierende Änderungen ihrer Druck- und Geschwindigkeitsverhältnisse, welche die gewünschte Trennung der Leichtflüssigkeit von der Schwerflüssigkeit begünstigen.

### Liste der Bezugszeichen

Abscheider 10
Abscheidebecken 12
Zulaufrohr 14
Ablaufrohr 16
Ablaufschwelle 18
Sammler 20
Wandung 22 des Sammlers 20
Achse 24 des Sammlers 20
unterer Bereich 26 des Sammlers 20
unterer Bereich 28 des Abscheidebeckens 12
Trennwand 30
Erzeugende 32
Leitkurve 34
Zwischenraum 36 der Trennwand 30 im Sammler 20
äusserster Zwischenraum 38 des Sammlers 20
oberer Rand 40 der Wandung 22 des Sammlers 20
oberer Rand 42 der Trennwand 30
Abzugsrohr 44 im Sammler 20
obere Öffnung 46 des Abzugsrohrs 44
Ölabdrückraum 48
unterer Bereich 50 des Ölabdrückraumes 48
Abflussrohr 52
Austrittsmündung 54 des Ablaufrohres 16
oberer Bereich 56 des Ölabdrückraumes 48
Überlauf 58
Öltank 60
unterer Rand 62 der Wandung 22
Ebene 64 des unteren Randes 62
untere Öffnung 66 des Sammlers 20
Teil 68 des Absch. 12 unter dem Zulaufrohr 14
Eintrittsmündung 70 des Zulaufrohres 14

## Patentansprüche

1. Abscheider zum Trennen eines einen kleineren Anteil Leichtflüssigkeit und einen grösseren Anteil Schwerflüssigkeit enthaltenden Zweiphasen-Flüssigkeitsgemisches, das gegebenenfalls auch Schlamm mitführt, wie ölverschmutztes und ggf. schlammführendes Wasser, mit
einem Abscheidebecken (12) zum Auffangen der Leichtflüssigkeit und ggf. des Schlammes, einem Zulaufrohr (14) für das zu trennende Gemisch und einem Ablaufrohr (16) für von Leichtflüssigkeit und ggf. von Schlamm weitgehend befreite Schwerflüssigkeit, wobei das Abscheidebecken (12) dazu ausgebildet ist, Flüssigkeit zumindest bis zu einem von einer Ablaufschwelle (18) vom Abscheidebecken (12) zum Ablaufrohr (16) hin vorgegebenen niedrigsten Flüssigkeitsspiegel zu enthalten, und
einem innerhalb des Abscheidebeckens (12) angeordneten Leichtflüssigkeit-Sammler (20), der eine im wesentlichen rohrförmige vertikale Wandung (22) aufweist,
wobei das Gemisch vom Zulaufrohr (14) zum Inneren des Sammlers (20) gelangt und aus einem unteren Bereich (26) des Sammlers (20) Schwerflüssigkeit und ggf. Schlamm zu einem unteren Bereich (28) des Abscheidebeckens (12) hin gelangt,
und wobei innerhalb des Sammlers (20) eine Trennwand (30) angeordnet ist, die im wesentlichen als Ausschnitt einer Regelfläche geformt ist, welche sich aus vertikalen Erzeugenden (32) und einer horizontalen spiralartigen Leitkurve (34) ergibt und sich ausgehend von der Wandung (22) des Sammlers (20) im wesentlichen bis zur Achse (24) des Sammlers (20) mit spiralartigen Windungen einrollt, und aufeinanderfolgende Windungen der Trennwand (30) miteinander einen spiralartigen Zwischenraum (36) definieren, während eine äusserste Windung der Trennwand (30) zusammen mit der Wandung (22) des Sammlers (20) einen äussersten Zwischenraum (38) definiert,
**dadurch gekennzeichnet, dass**
sowohl die Wandung (22) des Sammlers (20) wie auch die Trennwand (30) je einen oberen Rand (40,42) aufweisen, der zumindest im Bereich des äussersten Zwischenraumes (38) höher liegt als der niedrigste Flüssigkeitsspiegel,
das Zulaufrohr (14) durch die Wandung (22) des Sammlers (20) hindurch und annähernd tangential dazu in den äussersten Zwischenraum (38) des Sammlers (20) einmündet, und
der äusserste Zwischenraum (38) zumindest im Bereich einer Eintrittsmündung (70) des Zulaufrohres (14) eine horizontal-radiale lichte Weite aufweist, die annähernd einer horizontalen Weite des Zulaufrohres (14) entspricht.

2. Abscheider nach Anspruch 1, **dadurch gekennzeichnet, dass** die Trennwand (30) auf einer nach aussen gewandten Seite ihrer Windungen von der Leichtflüssigkeit weniger benetzbar ist als auf einer nach innen gewandten Seite ihrer Windungen und der Wandung (22) des Sammlers (20).

3. Abscheider nach Anspruch 2, **dadurch gekennzeichnet, dass** die Trennwand (30) auf ihrer nach aussen gewandten Seite mit einem die Leichtflüssigkeit abweisenden Material überzogen, beschichtet oder gestrichen ist.

4. Abscheider nach Anspruch 2, **dadurch gekennzeichnet, dass** die Trennwand (30) und die Wandung (22) des Sammlers (20) auf ihrer nach innen gewandten Seite mit einem von der Leichtflüssigkeit benetzbaren Material überzogen, beschichtet oder gestrichen ist.

5. Abscheider nach Anspruch 1, **gekennzeichnet durch** eine entlang den Windungen der Trennwand (30) variable, vorzugsweise periodisch variable horizontal-radiale lichte Weite des Zwischenraumes (36) zwischen den Windungen der Trennwand (30).

6. Abscheider nach Anspruch 1, **dadurch gekennzeichnet, dass** der obere Rand (42) der Trennwand (30) entlang deren Windungen von der Wandung (22) des Sammlers (20) zu dessen Achse (24) hin an Höhe verliert.

7. Abscheider nach Anspruch 1, **dadurch gekennzeichnet, dass** das Zulaufrohr (14) und das Ablaufrohr (16) im wesentlichen einander gegenüberliegend angeordnet sind und dass ein unterer:Rand (62) der Wandung (22) des Sammlers (20) bereichsweise auf einer geneigten Ebene (64) liegt, die einem annähernd vertikal unter dem Zulaufrohr (14) liegenden Teil (66) des unteren Bereiches (28) des Abscheidebeckens (12) zugewandt ist.

8. Abscheider nach Anspruch 1, **dadurch gekennzeichnet, dass** mittig-axial im Sammler ein Abzugsrohr (44) angeordnet ist, dessen obere Öffnung (46) etwa auf Höhe des niedrigsten Flüssigkeitsspiegels liegt und das zu einem Ölabdrückraum (48) hin verläuft, während von einem unterem Bereich (50) des Ölabdrückraumes (48) ein Abflussrohr (52) für die Schwerflüssigkeit zu bzw. zur Nähe einer Austrittsmündung (54) des Ablaufrohres (16) führt und von einem oberem Bereich (56) des Ölabdrückraumes (48) ein Überlauf (58) für die Leichtflüssigkeit zu einem Öltank (60) führt.

9. Abscheider nach Anspruch 8, **dadurch gekennzeichnet, dass** das Abzugsrohr (44) flexibel oder ausziehbar ausgebildet und an einem zum Schwimmen auf der Flüssigkeit vorgesehenen Schwimmkörper angeordnet ist.

10. Abscheider nach Anspruch 8, **dadurch gekennzeichnet, dass** der Ölabdrückraum (48) innerhalb des Abscheidebeckens (12) und der Sammler (20) innerhalb des Ölabdrückraumes (48) angeordnet ist.

11. Abscheider nach Anspruch 8, **dadurch gekennzeichnet, dass** der Ölabdrückraum (48) im Abscheidebecken (12) angeordnet ist und vor der Austrittsmündung (54) des Ablaufrohres (16) eine Tauchwand ausbildet, die nach oben bis oberhalb des niedrigsten Flüssigkeitsspiegels reicht und nach unten in die Flüssigkeit eintaucht, um den Zustrom von Flüssigkeit aus dem Abscheidebecken (12) zum Ablaufrohr (16) auf Flüssigkeitsmassen aus einem unteren Bereich (28) des Abscheidebeckens (12) zu beschränken.

12. Abscheider nach Anspruch 11, **dadurch gekennzeichnet, dass** in einem oberen Bereich der Tauchwand in Nähe des niedrigsten Flüssigkeitsspiegels eine Verbindung zum Rückführen von Flüssigkeit zum Sammler (20) vorgesehen ist.

13. Abscheider nach Anspruch 1, **dadurch gekennzeichnet, dass** ein unterer Bereich (28) des Abscheidebeckens (12) als Schlammfangraum ausgebildet ist.

## Claims

1. Separator for separating a two-phase fluid mixture containing a smaller proportion of light fluid and a larger proportion of heavy fluid which may or may not also be entraining sludge, such as oil-polluted and possibly sludge-entraining water, comprising
a separator tank (12) for catching the light fluid and possibly the sludge, an inlet pipe (14) for the mixture to be separated and an outlet pipe (16) for heavy fluid from which most of the light fluid and possibly any sludge has been separated, which separator tank (12) is designed to contain liquid at least up to a lowest fluid level predetermined by an outlet threshold (18) from the separator tank (12) to the outlet pipe (16) and
disposed inside the separator tank (12), a light fluid header (20) having an essentially tubular vertical wall (22),
whereby the mixtures arrives in the interior of the header (20) from the inlet pipe (14) and heavy fluid and possibly sludge arrive at a bottom region (28) of the separator tank (12) from a bottom region (26) of the header (20),
and a dividing wall (30) is provided inside the header (20) which is essentially in the shape of a segment of a control surface formed by a vertical imaginary line (32) and a horizontal spiral-shaped baffle curve (34) which rolls inwards from the wall (22) of the header (20) essentially as far as the axis (24) of the header (20) in spiral-shaped turns, and consecutive turns of the dividing wall (30) define a spiral-shaped intermediate space (36) with one another with an outermost turn of the dividing wall (30) defining an outermost intermediate space (38) in conjunction with the wall (22) of the header (20),
**characterised in that**
both the wall (22) of the header (20) and the dividing wall (30) each have a top edge (40, 42) which lies higher than the lowest liquid level at least in the region of the outermost intermediate space (38),
the inlet pipe (14) extends through the wall (22) of the header (20) and opens approximately at a tangent thereto into the outermost intermediate space (38) of the header (20) and
the outermost intermediate space (38) has a horizontal-radial internal width which approximately corresponds to a horizontal width of the inlet pipe (14) at least in the region of an inlet orifice (70) of the inlet pipe (14).

2. Separator as claimed in claim 1, **characterised in that** the dividing wall (30) is less readily wettable by the light fluid on an outwardly directed face of its turns than it is on an inwardly directed face of its turns and on the wall (22) of the header (20).

3. Separator as claimed in claim 2, **characterised in that** the dividing wall (30) is lined, coated or painted with a material which repels the light fluid on its outwardly directed face.

4. Separator as claimed in claim 2, **characterised in that** the dividing wall (30) and the wall (22) of the header (20) is lined, coated or painted with a material that is wettable by the light fluid on its inwardly directed face.

5. Separator as claimed in claim 1, **characterised by** a variable, preferably periodically variable, horizontal-radial internal width of the intermediate space (36) between the turns of the dividing wall (30) along the turns of the dividing wall (30).

6. Separator as claimed in claim 1, **characterised in that** the top edge (42) of the dividing wall (30) loses height along its turns from the wall (22) of the header (20) to its axis (24).

7. Separator as claimed in claim 1, **characterised in that** the inlet pipe (14) and the outlet pipe (16) are disposed essentially lying opposite one another and certain regions of a bottom edge (62) of the wall (22) of the header (20) lie on an inclined plane (64) which is directed towards an approximately vertical part (66) of the bottom region (28) of the separator tank (12) lying underneath the inlet pipe (14).

8. Separator as claimed in claim 1, **characterised in that** a drainage pipe (44) is provided in the header at the mid-axis, the top opening (46) of which lies approximately on a level with the lowest fluid level and which runs to an oil extraction chamber (48), whilst an outflow pipe (52) for the heavy fluid leads from a bottom region (50) of the oil extraction chamber (48) to or in the vicinity of an outlet orifice (54) of the outlet pipe (16) and an overflow (58) for the light fluid leads from a top region (56) of the oil extraction chamber (48) to an oil tank (60).

9. Separator as claimed in claim 8, **characterised in that** the drainage pipe (44) is of a flexible or extractable design and is disposed on a floating body intended to float on the liquid.

10. Separator as claimed in claim 8, **characterised in that** the oil extraction chamber (48) is disposed inside the separator tank (12) and the header (20) is disposed inside the oil extraction chamber (48).

11. Separator as claimed in claim 8, **characterised in that** the oil extraction chamber (48) is disposed in the separator tank (12) and forms a submersed wall in front of the outlet orifice (54) of the outlet pipe (16) which extends upwards to a point above the lowest fluid level and is submersed in the fluid towards the bottom in order to restrict the inflow of fluid from the separator tank (12) to the outlet pipe (16) to flow quantities from a bottom region (28) of the separator tank (12).

12. Separator as claimed in claim 11, **characterised in that** a connection is provided in a top region of the submersed wall in the vicinity of the lowest fluid level for returning fluid to the header (20).

13. Separator as claimed in claim 1, **characterised in that** a bottom region (28) of the separator tank (12) is designed as a sludge catchment chamber.

## Revendications

1. Séparateur destiné à séparer un mélange de liquides à deux phases contenant une part plus petite de liquide léger et une part plus grande de liquide lourd, transportant éventuellement également de la boue, tel que de l'eau souillée par de l'huile et éventuellement transportant de la boue, comprenant :
une cuve de séparation (12) pour capturer le liquide léger et éventuellement la boue, un tuyau d'alimentation (14) pour le mélange à séparer et un tuyau d'évacuation (16) pour le liquide lourd séparé de manière grossière du liquide léger et éventuellement de la boue, la cuve de séparation (12) étant en outre configurée pour contenir le liquide au moins jusqu'à un niveau de liquide le plus bas prédéterminé par un seuil d'évacuation (18) de la cuve de séparation (12) vers le tuyau d'évacuation (16), et
un collecteur de liquide léger (20) disposé à l'intérieur de la cuve de séparation (12) et présentant une paroi verticale (22) pour l'essentiel tubulaire, et dans lequel
le mélange provenant du tuyau d'alimentation (14) arrive jusqu'à l'intérieur du collecteur (20) alors que le liquide lourd et éventuellement la boue, partant d'une zone inférieure (26) du collecteur (20), parviennent jusqu'à une zone inférieure (28) de la cuve de séparation (12),
et à l'intérieur du collecteur (20), une cloison de séparation (30) a pour l'essentiel la forme d'une découpe d'une surface régulière obtenue à partir de génératrices verticales (32) et d'une courbe directrice horizontale (34) en forme de spirale, et s'enroule avec des enroulements en forme de spirales à partir de la paroi (22) du collecteur (20) pour l'essentiel jusqu'à l'axe (24) du collecteur (20), des spires successives de la cloison de séparation (30) définissant entre elles une zone intermédiaire (36) en forme de spirale tandis qu'une spire de la cloison de séparation (30) la plus extérieure définissant, conjointement avec la paroi (22) du collecteur (20), une zone intermédiaire la plus extérieure (38),
**caractérisé en ce qu'**
aussi bien la paroi (22) du collecteur (20) que la cloison de séparation (30) présentent chacune un bord supérieur (40, 42) situé, au moins au niveau de la zone intermédiaire la plus extérieure (38), plus haut que le niveau de liquide le plus bas,
le tuyau d'alimentation (14) traversant la paroi (22) du collecteur (20) et approximativement tangentiel à celle-ci, débouche dans la zone intermédiaire la plus extérieure (38) du collecteur (20), et
la zone intermédiaire la plus extérieure (38) présente, au niveau d'une embouchure d'entrée (70) du tuyau d'alimentation (14), un diamètre intérieur horizontal-radial correspondant approximativement à une largeur horizontale du tuyau d'alimentation (14).

2. Séparateur selon la revendication 1,
**caractérisé en ce que**
la cloison de séparation (30) peut, sur un coté de ses spires tourné vers l'extérieur, etre moins mouillée par le liquide léger, que sur un coté de ses spires tourné vers l'intérieur et sur la paroi (22) du collecteur (20).

3. Séparateur selon la revendication 2,
**caractérisé en ce que**
sur son coté tourné vers l'extérieur, la cloison de séparation (30) est revetue, recouverte ou enduite avec un matériau repoussant le liquide léger.

4. Séparateur selon la revendication 2,
**caractérisé en ce que**
sur leur coté tourné vers l'intérieur, la cloison de séparation (30) et la paroi (22) du collecteur (20) sont revetues, recouvertes ou enduites avec un matériau pouvant etre mouillé par le liquide léger.

5. Séparateur selon la revendication 1,
**caractérisé en ce que**
la zone intermédiaire (36) entre les spires de la cloison de séparation (30) à une largeur libre horizontale-radiale variable le long des spires de la cloison de séparation (30), de préférence variable périodiquement.

6. Séparateur selon la revendication 1,
**caractérisé en ce que**
le bord supérieur (42) de la cloison de séparation (30) diminue en hauteur le long des spires de la paroi (22) du collecteur (20) jusqu'à son axe (24).

7. Séparateur selon la revendication 1,
**caractérisé en ce que**
le tuyau d'alimentation (14) et le tuyau d'évacuation (16) sont pour l'essentiel disposés à l'opposé l'un de l'autre, et un bord inférieur (62) de la paroi (22) du collecteur (20) est situé par zones sur un plan incliné (64) en regard d'une partie (66) approximativement verticale de la zone inférieure (28) de la cuve de séparation (12), située en dessous du tuyau d'alimentation (14).

8. Séparateur selon la revendication 1,
**caractérisé en ce qu'**
un tuyau de refoulement (44) disposé centralement par rapport à l'axe dans le collecteur a son ouverture supérieure (46) sensiblement à hauteur du niveau de liquide le plus bas et s'étend jusqu'à une chambre de pression d'huile (48) tandis qu'un tuyau d'écoulement (52) pour le liquide lourd conduit d'une zone inférieure (50) de la chambre de pression d'huile (48) vers ou à proximité d'une embouchure de sortie (54) du tuyau d'évacuation (16) et un trop-plein (58) pour le liquide léger conduit d'une zone supérieure (56) de la chambre de pression d'huile (48) jusqu'à un réservoir d'huile (60).

9. Séparateur selon la revendication 8,
**caractérisé en ce que**
le tuyau de refoulement (44) est flexible ou peut etre étiré et est disposé sur un corps flottant prévu pour flotter sur le liquide.

10. Séparateur selon la revendication 8,
**caractérisé en ce que**
la chambre de pression d'huile (48) est disposée à l'intérieur de la cuve de séparation (12) et le collecteur (20) à l'intérieur de la chambre de pression d'huile (48).

11. Séparateur selon la revendication 8,
**caractérisé en ce que**
la chambre de pression d'huile (48) est disposée dans la cuve de séparation (12) et forme une paroi plongeante devant l'embouchure de sortie (54) du tuyau d'évacuation (16), paroi qui parvient vers le haut jusqu'au-dessus du niveau de liquide le plus bas et plonge vers le bas dans le liquide pour limiter l'écoulement du liquide de la cuve de séparation (12) vers le tuyau d'évacuation (16) sur des masses de liquides d'une zone inférieure (28) de la cuve de séparation (12).

12. Séparateur selon la revendication 11,
**caractérisé en ce que**
dans une zone supérieure de la paroi plongeante, à proximité du niveau de liquide le plus bas, une liaison redirige le liquide vers le collecteur (20).

13. Séparateur selon la revendication 1,
**caractérisé en ce qu'**
une zone inférieure (28) de la cuve de séparation (12) a la forme d'une chambre de capture de la boue.
